# EUROPEAN PATENT SPECIFICATION

(11) **EP 0 348 096 B1**
(45) Date of publication and mention of the grant of the patent: **03.08.1994**
(21) Application number: 89306029.3
(22) Date of filing: 14.06.1989
(51) Int. Cl.: B60N 2/00

(54) **Vehicle passenger seating**
Fahrzeugpassagierbestuhlung
Disposition des sièges des passagers de véhicule

(30) Priority: 18.06.1988 GB 8814536
(43) Date of publication of application: 27.12.1989
(73) Proprietor: FLIGHT EQUIPMENT AND ENGINEERING LIMITED, Leighton Buzzard, Bedfordshire LU7 8TB (GB)
(72) Inventor: Branham, John Frederick, Wingrave, Nr. Aylesbury Buckinghamshire (GB); Tcheng, John, Gerrards Cross Buckinghamshire SL9 8QD (GB)
(74) Representative: Lishman, Peter David

(56) References cited:
- WO-A-82/03366
- GB-A- 2 022 403
- GB-A- 2 035 790
- US-A- 4 099 780
- US-A- 4 186 964

## Description

Seating for passengers in vehicles is commonly provided on seating units comprising two or more seats abreast. British Patent Specification No. 1,121,123 discloses such a unit in which the seat portion is in the form of a trough. Usually, however, such a seating unit is constructed on a support frame comprising two transverse parallel beams, substantially horizontal in the normal upright position of the seating unit. The transverse parallel beams are usually tubes of circular cross section, carried on legs having feet for engaging mountings on the floor of the vehicle. The transverse parallel beams are joined by two or more spaced longitudinal members, perpendicular to the beams and generally horizontal in the normal upright position of the seating unit. There is usually a longitudinal member at each side of a seating unit and at least one between each pair of adjacent seats. The transverse parallel beams enter or pass through bores in the longitudinal members, in which they are a close fit to provide a rigid structure. The bottom seat cushions are supported by the transverse parallel beams and/or the longitudinal members. The longitudinal members are extended rearwardly and upwardly from their bores through which the rearmost of the transverse parallel beams passes, to provide mountings, usually pivotal, for the backrests for the seats. Examples of such a support frame are described in British Patent Specification No. 2 035 790 and PCT Publication No. WO 82/03366.

Side armrests are usually mounted on the longitudinal members at the sides of the support frame and intermediate armrests for defining and separating the seats are mounted on longitudinal members between adjacent seats or on parts of the frame adjacent to those longitudinal members.

The side armrest at a side of the seating unit which is to be adjacent to an aisle of a vehicle in which it is fitted must have sufficient strength to resist the leverage forces applied by passengers entering and leaving seats as well as impact forces which may be applied by passengers moving in the aisle or by trollies used to serve passengers occupying the seats. Such a side armrest is usually bolted to the flank of the side longitudinal member. The forces mentioned produce bending and shearing loads on the bolts and to resist these forces the bolts, the side armrest and the side longitudinal member must be of massive construction. To conceal the constructional details and give a neat appearance, it is usual to fit a shaped faring of reinforced plastics material over at least a part of the aisle side armrest and the longitudinal member on which it is mounted.

According to this invention, a support frame for a vehicle passenger seating unit comprising two transverse parallel beams carried on legs for attachment to the floor of a vehicle and joined by at least two spaced generally horizontal longitudinal members and an armrest member comprising rear and front armrest support struts and an armrest top support portion is characterized in that said armrest member is formed as a single integral part with one of the said longitudinal members.

This arrangement simplifies the construction and assembly of a seating unit and enables increased strength to be provided without unduly massive construction.

In the case of a longitudinal member for the side of a support frame which is to be adjacent to an aisle when the support frame is mounted in a vehicle, constructional details enabling it to be secured to the other parts of the frame and for mounting other parts of the seat would be exposed on its side which is to be outermost when it is in position in the support frame. These constructional details include the bores and the ends of the transverse parallel beams received in them and mountings for the backrest parts of the seat. According to a further feature of the invention, when the said armrest member is formed as a single integral part with such a longitudinal member, the said longitudinal member has a recess in its said side, having a wall surrounding and enclosing such constructional details, and a separate panel is provided to fit in the mouth of the recess to conceal them. The recess may be utilised to accommodate other elements of the seating unit, such as mechanical control cables, electric cables and electrical components such as components of an audio system.

The edge of the wall of the recess is preferably undercut so that the panel can be snapped into the recess and will be self-retaining once so fitted.

The invention includes a vehicle seating unit including a support frame as described above and a vehicle including such a seating unit.

The invention not only reduces the number of parts in the seating unit and thereby provides savings in assembly time and labour, but provides, in the case of a side armrest, a structure capable of withstanding the aforementioned forces with a significant saving of weight and width, measured in the lateral direction of the seating unit, so that increased space may be provided for passengers. As there is no bolting of armrest to longitudinal member, a neater appearance results and it is not necessary to use a faring over the longitudinal member, as hitherto.

An embodiment of the invention is illustrated by the accompanying drawings, in which :
- Figure 1: is a side elevation of a vehicle seating unit,
- Figure 2: is a side elevation of a side longitudinal member of the support frame of the seating unit shown in Figure 1, and
- Figure 3: is a section on the line A-A of Figure 2.

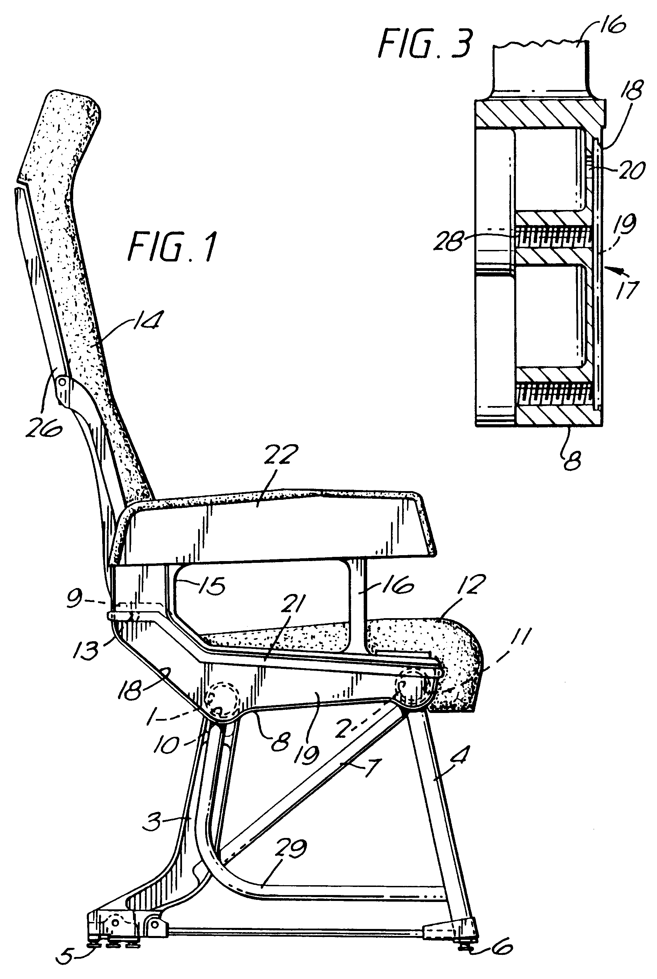

The seating unit shown in Figure 1 is constructed on a support frame comprising two tubular transverse parallel beams 1, 2, of circular cross section, carried on legs 3, 4 having feet 5, 6 respectively for engaging the floor of a vehicle and braced by a diagonal strut 7. The beams 1, 2 are joined by two or more spaced parallel generally horizontal longitudinal members, perpendicular to the beams, one of which, 8, is shown at the near side of the seating unit. The other longitudinal members are of a more conventional shape in this seating unit, but they could be similar to the member 8. For simplicity, only one other longitudinal member 9 is shown in the concealed detail. There is a longitudinal member at each side and one between each pair of adjacent seats provided by the unit. The parallel beams 1, 2 are closely fitted in bores 10, 11 in the longitudinal member 8 and similar bores in the other longitudinal members, thus providing a rigid structure and they are secured by clamping screws (not shown) in the longitudinal members. Bottom seat cushions 12 are supported by the parallel beams 1, 2. All the longitudinal members are extended rearwardly and upwardly from their bores 10, through which the rearmost parallel beam 1 passes, to provide pivotal mountings 13 for the backrests 14 for the seats. The side longitudinal member 8, however, is formed as a single integral part with an armrest member, being further extended upwardly to provide a rear armrest support 15 and with an integral front armrest supporting strut 16, the upper ends of the rear support 15 and the front strut 16 being joined to an armrest top support portion.

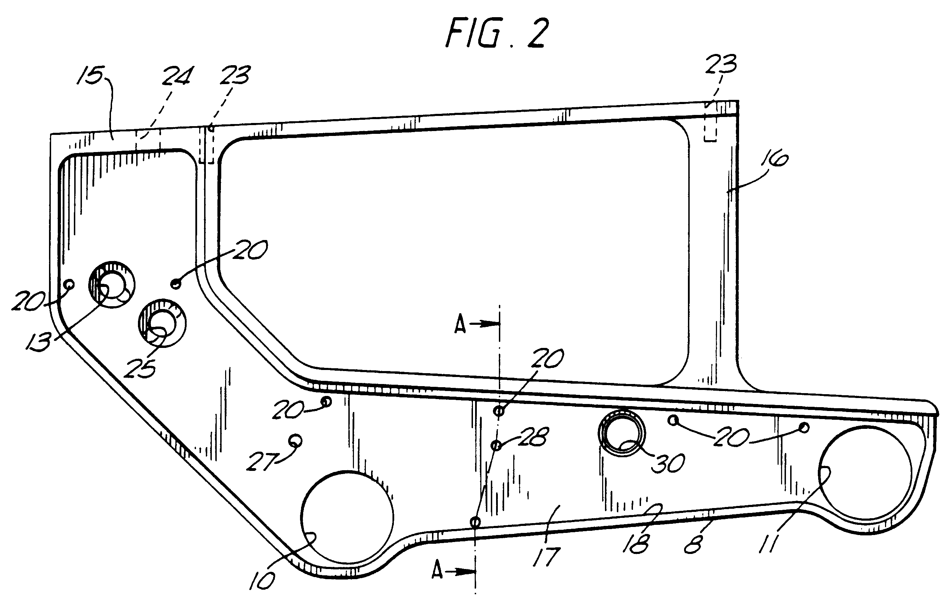

The integral armrest member and side longitudinal member 8, which will be adjacent to an aisle when the seating unit is fitted in a vehicle, is shown in more detail in Figures 2 and 3. Figure 2 shows the side of the component which will be outermost when it is mounted in the support frame. The open ends of the bores 10, 11 which are to receive the ends of the transverse beams 1, 2 and of the bore 13 in which the backrest 14 is to be mounted are visible on this side and in previous seating constructions they would be covered by a shaped faring in the finished seat. Instead of this, the longitudinal member 8 has a shallow recess 17 enclosing these constructional details, with an undercut peripheral lip 18. When the seating unit is assembled, a separate flat panel 19, shown in chain-dotted lines, is fitted in this recess, being of such dimensions that it may be snapped into place behind the lip 18 and will be self-retaining. This not only gives a neat appearance to the finished seat but is cheaper and more easily fitted than the usual shaped faring. It can also be replaced quite easily. Further advantages may be utilised by vehicle operators, for example to identify different rows of seats by fitting differently coloured panels 19; to give an individual appearance to a vehicle by fitting panels printed with the insignia of a charterer of the vehicle; or to advertise by fitting panels printed with advertising matter. The integral armrest member and longitudinal member 8 itself may also be coloured, for example by anodising if it is of aluminium or an alloy or by self colouring if it is of a plastics/fibre composite material.

Six holes 20 are formed in the base of the recess 17 to receive fastenings for mounting a buffer bar 21, as shown in Figure 1, and the panel 19 has aligned holes through which the fastenings can pass, so that impact forces applied by passengers or service trolleys are transmitted directly to the member 8.

An upholstered armrest top 22 is mounted on the armrest top support portion, being secured in bores 23 in its top surface. A hole 24 in the top support portion provides for the passage of control cables, for example for the seat recline mechanism and for audio supply, into the armrest top 22. The member 8 also has the usual bores 25 for mounting a table 26, 27 for a seat belt anchorage, 28 for mounting the baggage bar 29, and 30 for anchoring the seat recline mechanism. In the finished seating unit, all these bores and elements fitted in them are concealed by the panel 19 as shown in Figure 1.

Although in the embodiment shown in the drawings the armrest top support portion is little more than a flat strut, it could be shaped to provide the whole or substantially the whole of an armrest. In the latter case some padding would be mounted on its upper surface.

## Claims

1. A support frame for a vehicle passenger seating unit comprising two transverse parallel beams (1,2) carried on legs (3,4) for attachment to the floor of a vehicle and joined by at least two spaced generally horizontal longitudinal members (8,9) and an armrest member comprising rear and front armrest support struts (15,16) and an armrest top support portion, characterized in that said armrest member is formed as a single integral part with one of the said longitudinal members.

2. A support frame as claimed in Claim 1 wherein the said armrest member is formed as a single integral part with the longitudinal member (8) which is to be adjacent to an aisle when the seating unit is fitted in a vehicle, characterized by a recess (17) in the side of the longitudinal member (8) which is to be outermost with respect to the seating unit, surrounding and enclosing constructional details of its attachment to other parts of the support frame and of the seating unit, and in that a separate panel (19) is provided to fit in the mouth of the recess to conceal those details.

3. A support frame as claimed in Claim 2, characterized in that the edges (18) of the recess (17) are undercut and in that the panel (19) is so dimensioned that it can be snapped into the recess (17) and will be self-retaining once fitted in the recess.

4. A vehicle seating unit, characterized in that it includes a support frame as claimed in Claim 3.

5. A vehicle, characterized in that it includes a seating unit as claimed in Claim 4.

## Patentansprüche

1. Tragrahmen für eine Passagiersitzeinheit eines Fahrzeugs mit
- zwei parallelen Querträgern (1, 2), die auf Beinen (3, 4) zur Befestigung am Boden eines Fahrzeugs gelagert und durch wenigstens zwei im Abstand angeordnete, insgesamt horizontale Längselemente (8, 9) verbunden sind, und
- einem Armlehnenelement, das eine hintere und eine vordere Armlehnenstützstrebe (15, 16) sowie einen oberen Armlehnenstützabschnitt aufweist,
dadurch gekennzeichnet, daß das Armlehnenelement mit einem der Längselemente ein einziges Teil bildet.

2. Tragrahmen nach Anspruch 1, bei welchem das Armlehnenelement mit dem Längselement (8) ein einziges Teil bildet, das angrenzend an einen Gang angeordnet werden soll, wenn die Sitzeinheit in ein Fahrzeug eingebaut wird, gekennzeichnet durch eine Aussparung (17) in der Seite des Längselements (8), welche bezüglich der Sitzeinheit ganz außen liegen soll und die Bauteile seiner Befestigung an anderen Teilen des Tragrahmens und der Sitzeinheit umgibt und einschließt, und dadurch, daß eine getrennte Platte (19) vorgesehen ist, die in die Öffnung der Aussparung paßt, um jene Teile zu verdecken.

3. Tragrahmen nach Anspruch 2, dadurch gekennzeichnet, daß die Ränder (18) der Aussparung (17) hinterschnitten sind und daß die Platte (19) so dimensioniert ist, daß sie in die Aussparung (17) eingeschnappt werden kann und von selbst hält, wenn sie einmal in die Aussparung eingepaßt worden ist.

4. Fahrzeugsitzeinheit, dadurch gekennzeichnet, daß sie einen Tragrahmen nach Anspruch 3 aufweist.

5. Fahrzeug, dadurch gekennzeichnet, daß es eine Sitzeinheit nach Anspruch 4 aufweist.

## Revendications

1. Châssis de support pour ensemble formant siège de passager pour véhicule, comprenant deux poutres transversales parallèles (1, 2) portées par des colonnes (3, 4) destinées à être fixées au plancher d'un véhicule et raccordées par au moins deux organes longitudinaux espacés (8, 9) horizontaux de façon générale, et un organe d'accoudoir comprenant des montants arrière et avant (15, 16) de support d'accoudoir et une partie supérieure de support d'accoudoir, caractérisé en ce que l'organe d'accoudoir est formé en une seule pièce avec l'un des organes longitudinaux.

2. Châssis de support selon la revendication 1, dans lequel l'organe d'accoudoir est formé d'une seule partie solidaire de l'organe longitudinal (8) qui doit être voisin d'une allée lorsque l'ensemble formant siège est monté dans un véhicule, caractérisé par une cavité (17) formée sur le côté de l'organe longitudinal (8) qui doit être le côté externe par rapport à l'ensemble formant siège, afin qu'il entoure et enferme les détails de construction de sa fixation à d'autres parties du châssis de support et de l'ensemble formant siège, et en ce qu'un panneau séparé (19) est destiné à s'ajuster dans l'embouchure de la cavité afin qu'il cache ces détails.

3. Châssis de support selon la revendication 2, caractérisé en ce que les bords (18) de la cavité (17) sont en surplomb, et en ce que le panneau (19) a des dimensions telles qu'il peut être enclenché élastiquement dans la cavité (17) et est alors retenu automatiquement lorsqu'il est monté dans la cavité.

4. Ensemble formant siège pour véhicule, caractérisé en ce qu'il comprend un châssis de support selon la revendication 3.

5. Véhicule caractérisé en ce qu'il comprend un ensemble formant siège selon la revendication 4.
